# EUROPÄISCHE PATENTSCHRIFT

(11) **EP 1 053 273 B1**
(45) Veröffentlichungstag und Bekanntmachung des Hinweises auf die Patenterteilung: **17.04.2002**
(21) Anmeldenummer: 99907411.5
(22) Anmeldetag: 25.01.1999
(51) Int. Cl.: C08G 69/04, C08G 69/08, C08G 69/16, C08G 69/00

(54) **DISKONTINUIERLICHES VERFAHREN ZUR HERSTELLUNG VON POLYAMIDEN AUS AMINONITRILEN**
DISCONTINUOUS METHOD FOR PRODUCING POLYAMIDES FROM AMINONITRILES
PROCEDE DISCONTINU DE PRODUCTION DE POLYAMIDES A PARTIR D'AMINONITRILES

(30) Priorität: 02.02.1998 DE 19804014
(43) Veröffentlichungstag der Anmeldung: 22.11.2000
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE)
(74) Vertreter: Isenbruck, Günter, Dr.
(86) Internationale Anmeldenummer: EP9900456
(87) Internationale Veröffentlichungsnummer: WO9938905

(56) Entgegenhaltungen:
- EP-A- 0 227 866
- EP-A- 0 479 306
- DE-A- 3 534 817
- US-A- 4 629 776

## Beschreibung

Die vorliegende Erfindung betrifft ein diskontinuierliches Verfahren zur Herstellung von Polyamiden aus Aminonitrilen und Wasser bei erhöhter Temperatur und erhöhtem Druck in Gegenwart eines Katalysators.

In der US 4,629,776 ist ein katalytisches Verfahren zur Herstellung von Polyamiden aus ω-Aminonitrilen wie ω-Aminocapronitril (ACN) beschrieben. ACN wird mit Wasser in Gegenwart einer katalytischen Menge einer oxidierten Schwefelverbindung als Katalysator umgesetzt. Beispielsweise wird Schwefelsäure als Katalysator eingesetzt.

In der US 4,568,736 und DE-A-35 34 817 sind ähnliche katalytische Verfahren zur Herstellung von Polyamiden beschrieben. Als Katalysator wird hier eine sauerstoffhaltige Phosphorverbindung, Phosphorsäure oder eine Phosphonsäure eingesetzt.

Eine vollständige Abtrennung der Katalysatoren ist in beiden Verfahren praktisch nicht möglich. Das Vorliegen der Katalysatoren im Polymer kann den Aufbau hochmolekularer Polymere behindern und spätere Verarbeitungsschritte, etwa das Verspinnen erschweren. Zudem ist der Gehalt an flüchtigen Bestandteilen in den erhaltenen Polymeren hoch, so daß die Polyamide schwierig zu verarbeiten sind.

In der EP-A-0 479 306 ist die Herstellung von Polyamiden aus ω-Aminonitrilen beschrieben. Die ω-Aminonitrile werden dabei mit Wasser in Gegenwart einer sauerstoffhaltigen Phosphorverbindung als Katalysator umgesetzt. Im Verfahren werden nach Erreichen einer Reaktionstemperatur von 200 bis 260°C kontinuierlich Ammoniak und Wasser durch Entspannen entfernt, und es wird gleichzeitig kontinuierlich Wasser zugesetzt, wobei der Druck im Bereich von 14 bis 24 x 10⁵ Pa (14-24 bar) gewählt wird.

Die DE-A-43 39 648 betrifft ein Verfahren zur Herstellung von Caprolactam durch Umsetzung von Aminocarbonsäurenitrilen mit Wasser, wobei in flüssiger Phase unter Verwendung heterogener Katalysatoren gearbeitet wird. Als heterogene Katalysatoren können dabei saure, basische oder amphotere Oxide der Elemente der 2., 3. oder 4. Hauptgruppe des Periodensystems eingesetzt werden. Beispielsweise kann Titandioxid eingesetzt werden. Der Katalysator wird beispielsweise in Form von Strängen eingesetzt.

Aufgabe der vorliegenden Erfindung ist die Bereitstellung eines Verfahrens zur Herstellung von Polyamiden aus Aminonitrilen, das eine verbesserte Hydrolyse der Reaktanten, insbesondere der Säureamid-Gruppen und einen verbesserten Molekulargewichtsaufbau gewährleistet. Der eingesetzte Katalysator soll möglichst weitgehend aus dem Reaktionsgemisch entfernt werden können und eine hohe Wirksamkeit aufweisen. Zudem soll die Temperfähigkeit der erhaltenen Polyamide verbessert werden.

Die Aufgabe wird erfindungsgemäß gelöst durch ein diskontinuierliches Verfahren zur Herstellung eines Polyamids durch Umsetzung eines mindestens ein Aminonitril und gegebenenfalls zur Polyamidherstellung einsetzbare Monomere enthaltenden Gemisches mit Wasser, das die folgenden Stufen umfaßt:
(1) Umsetzung des Gemisches mit Wasser bei einer Temperatur von 90 bis 400°C, und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis 30 x 10⁶ Pa, wobei ein Produktgemisch erhalten wird,
wobei Stufe (1) in Gegenwart eines Brönsted-Säurekatalysators, ausgewählt aus einem Beta-Zeolith-, Schichtsilikat- oder einem Festbettkatalysator, der im wesentlichen aus TiO₂ mit 70 bis 100 Gew.-% Anatas und 0 bis 30 Gew.-% Rutil, in dem bis zu 40 Gew.-% des Titandioxids durch Wolframoxid ersetzt sein können, besteht, durchgeführt wird, und die Stufen (2) und (3) in Gegenwart dieses Katalysators durchgeführt werden können.

Die Erfindung betrifft zudem ein diskontinuierliches Verfahren zur Herstellung eines Polyamids durch Umsetzung eines mindestens ein Aminonitril und gegebenenfalls zur Polyamidherstellung einsetzbare Monomere enthaltenden Gemisches mit Wasser, das die folgenden Stufen umfaßt:
(1) Umsetzung des Gemisches mit Wasser bei einer Temperatur von 90 bis 400°C und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis 30 x 10⁶ Pa, wobei ein Produktgemisch erhalten wird,
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden,
wobei Stufe (1) in Gegenwart eines Brönsted-Säurekatalysators, ausgewählt aus einem Beta-Zeolith-, Schichtsilikat- oder einem Festbettkatalysators der im wesentlichen aus TiO₂ mit 70 bis 100 Gew.-% Anatas und 0 bis 30 Gew.-% Rutil, in dem bis zu 40 Gew.-% des Titandioxids durch Wolframoxid ersetzt sein können, besteht, durchgeführt wird, und die Stufen (2) und (3) in Gegenwart dieses Katalysators durchgeführt werden können.

Vorzugsweise wird in dem vorstehenden Verfahren in Stufe (3) die gasförmige oder flüssige Phase, die Wasser enthält, in einer Menge von 50 bis 1500 ml Wasser pro 1 kg erste flüssige oder erste Phase oder Gemisch aus erster flüssiger und erster fester Phase zugesetzt.

Die Erfindung betrifft ferner ein Verfahren zur Herstellung eines Polyamids durch Umsetzung eines mindestens ein Aminonitril und gegebenenfalls zur Polyamidherstellung einsetzbare Monomere enthaltenden Gemisches mit Wasser, das die folgenden Stufen umfaßt:
(1) Umsetzung des Gemisches mit Wasser bei einer Temperatur von 90 bis 400°C und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden,
wobei Stufe (1) in Gegenwart eines Brönsted-Säurekatalysators, ausgewählt aus einem Beta-Zeolith-, Schichtsilikat- oder einem Festbettkatalysator, der im wesentlichen aus TiO₂ mit 70 bis 100 Gew.-% Anatas und 0 bis 30 Gew.-% Rutil, in dem bis zu 40 Gew.-% des Titandioxids durch Wolframoxid ersetzt sein können, besteht, durchgeführt wird, und die Stufe (2) in Gegenwart dieses Katalysators durchgeführt werden kann.

Die prinzipielle Vorgehensweise des erfindungsgemäßen Verfahrens ist in der prioritätsälteren, nicht vorveröffentlichten DE-A-197 09 390 beschrieben.

Als Aminonitril können im Gemisch prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe eine Alkylengruppe mit mindestens einem C-Atom aufweisen. Unter den Aminoalkylarylnitrilen sind insbesondere solche bevorzugt, die die Amino- und Nitrilgruppe in 1,4-Stellung zueinander aufweisen.
Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5,151,543.

Es können auch Gemische mehrer Aminonitrile oder Gemische eines Aminonitrils mit weiteren Comonomeren, wie Caprolactam oder das untenstehend näher definierte Gemisch eingesetzt werden.

In einer besonderen Ausführungsform, insbesondere wenn man Copolyamide oder verzweigte beziehungsweise kettenverlängerte Polyamide herstellen möchte, setzt man anstelle von reinem 6-Aminocapronitril folgendes Gemisch ein:
50 bis 99,99, bevorzugt 80 bis 90 Gew.-% 6-Aminocapronitril,
0,01 bis 50, bevorzugt von 1 bis 30 Gew.-% mindestens einer Dicarbonsäure, ausgewählt aus der Gruppe bestehend aus aliphatischen C₄-C₁₀-α,ω-Dicarbonsäuren, aromatischen C₈-C₁₂-Dicarbonsäuren und C₅-C₈-Cycloalkandicarbonsäuren,
0 bis 50 bevorzugt 0,1 bis 30 Gew.-% eines α,ω-Diamins mit 4 bis 10 Kohlenstoffatomen,
0 bis 50 bevorzugt 0 bis 30 Gew.-% eines α,ω-C₂-C₁₂-Dinitrils sowie
0 bis 50 bevorzugt 0 bis 30 Gew.-% einer α,ω-C₅-C₁₂-Aminosäure oder des entsprechenden Lactams,
0 bis 10 Gew.-% mindestens einer anorganischen Säure oder deren Salze,
wobei die Summe der einzelnen Gewichtsprozentangaben 100 % beträgt.

Als Dicarbonsäuren kann man aliphatische C₄-C₁₀-α,ω-Dicarbonsäuren, wie Bernsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäuren wie Cyclohexandicarbonsäure einsetzen.

Als α,ω-Diamin mit 4 bis 10 Kohlenstoffatomen kann man Tetramethylendiamin, Pentamethylendiamin, Hexamethylendiamin, Heptamethylendiamin, Octamethylendiamin, Nonamethylendiamin und Decamethylendiamin, bevorzugt Hexamethylendiamin, einsetzen.

Des weiteren ist es auch möglich, Salze aus den genannten Dicarbonsäuren und Diaminen einzusetzen, insbesondere das Salz aus Adipinsäure und Hexamethylendiamin, sogenanntes AH-Salz.

Als α,ω-C₂-C₁₂-Dinitril setzt man bevorzugt aliphatische Dinitrile, wie 1,4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenverbindungen ableiten, verwenden.

Als α,ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, einsetzen.

Erfindungsgemäß wird in einer ersten Stufe (Stufe 1) ein Aminonitril mit Wasser, bei einer Temperatur von 90 bis 400°C, vorzugsweise ungefähr 180 bis 310°C und insbesondere bei 220 bis 270°C erhitzt, wobei ein Druck von 0,1 bis 15 x 10⁶ Pa, vorzugsweise 1 bis 10 x 10⁶ Pa und insbesondere 4 bis 9 x 10⁶ Pa eingestellt wird. Dabei können in dieser Stufe Druck und Temperatur so aufeinander abgestimmt werden, daß eine flüssige oder eine feste Phase und ein Gemisch aus flüssiger oder fester Phase und eine gasförmige Phase erhalten werden.

Erfindungsgemäß setzt man Wasser in einem Molverhältnis von Aminoalkylnitril zu Wasser im Bereich von 1:1 bis 1:10, besonders bevorzugt von 1:2 bis 1:8, ganz besonders bevorzugt von 1:2 bis 1:6, ein, wobei der Einsatz von Wasser im Überschuß, bezogen auf das eingesetzte Aminoalkylnitril, bevorzugt ist.

Bei dieser Ausführungsform entspricht die flüssige oder feste Phase oder das Gemisch aus flüssiger und fester Phase dem Umsetzungsgemisch, während die gasförmige Phase abgetrennt wird. Dabei kann im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/fest-gasförmig vorliegen. Druck und Temperatur können auch so aufeinander abgestimmt werden, daß das Reaktionsgemisch einphasig-fest oder -flüssig vorliegt.

Die Abtrennung der Gasphase kann durch den Einsatz von gerührten oder nichtgerührten Abscheidekesseln oder Kesselkaskaden sowie durch den Einsatz von Verdampferapparaten erfolgen, z.B. durch Umlaufverdampfer oder Dünnschichtverdampfer, wie durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

In Stufe 1 können Rührkessel oder Kesselkaskaden eingesetzt werden. Bei einer zweiphasigen Fahrweise wird der Einsatz von Kesseln oder einer Reaktionskolonne bevorzugt.

Bezüglich der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 30 Minuten und ungefähr 6 Stunden gewählt.

Obwohl auch bezüglich des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als ungefähr 70 mol-%, vorzugsweise mindestens ungefähr 95 mol-% und insbesondere ungefähr 97 bis ungefähr 99 mol-%, jeweils bezogen auf die Molzahl an eingesetztem Aminonitril.

Den Umsatz an Nitrilgruppen ermittelt man üblicherweise mittels IR-Spektroskopie (CN-Valenz-Schwingung bei 2247 Wellenzahlen), NMR oder HPLC, bevorzugt durch IR-Spektroskopie.

In einer weiteren bevorzugten Ausführungsform wird das Aminonitril/Wasser-Gemisch kontinuierlich mit Hilfe eines Wärmetauschers erhitzt, und das so erhitzte Gemisch in ein auf die gleiche Temperatur temperiertes Reaktionsgefäß eingeführt. Selbstverständlich können das Aminonitril und das Wasser auch getrennt voneinander aufgeheizt werden.

Weiterhin ist es erfindungsgemäß nicht ausgeschlossen, die Umsetzung in Stufe 1 auch in Gegenwart von sauerstoffhaltigen Phosphorverbindungen, insbesondere Phosphorsäure, phosphorige Säure und hypophosphorigen Säure sowie deren Alkalimetall- und Erdalkalimetallsalzen und Ammoniumsalzen wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂HPO₃, KH₂PO₂ durchzuführen, wobei man das Molverhältnis von ω-Aminonitril zu Phosphorverbindungen im Bereich von 0,01:1 bis 1:1, bevorzugt von 0,01:1 bis 0,1:1 wählt.

Erfindungsgemäß werden Stufe (1) und gegebenenfalls Stufe (2) und/oder (3) in Gegenwart eines Brönsted-Säurekatalysators, ausgewählt aus einem Beta-Zeolith-, Schichtsilikat- oder einem Festbettkatalysator durchgeführt, der im wesentlichen aus TiO₂ mit 70 bis 100 Gew.-% Anatas und 0 bis 30 Gew.-% Rutil, in dem bis zu 40 Gew.-% des Titandioxids durch Wolframoxid ersetzt sein können, besteht. In Stufe (4) wird vorzugsweise kein Festbettkatalysator eingesetzt. Vor der Nachkondensation in Stufe (4) kann der heterogene Katalysator leicht vom Reaktionsgemisch abgetrennt werden, da die Viskosität des Reaktionsgemisches noch relativ gering ist. Dies ermöglicht eine zumindest weitgehende, vorzugsweise vollständige Trennung von Katalysator und Produktgemisch.

Ein Katalysator mit einem hohen Gehalt an Anatas ist insbesondere geeignet, wenn reines Aminocapronitril (ACN), das sehr wenig oder keine Verunreinigungen aufweist, verwendet wird. Vorzugsweise enthält ein derartiger Katalysator 80 bis 100 Gew.-% Anatas und 0 bis 20 Gew.-% Rutil, vorzugsweise besteht er im wesentlichen oder vollständig aus Anatas. Wird verunreinigtes Aminocapronitril, das etwa 1 bis 3 Gew. - % Verunreinigungen enthält, eingesetzt, so wird vorzugsweise ein Katalysator mit einem höheren Anteil an Rutil eingesetzt. Ein bevorzugter Katalysator enthält 70 bis 80 Gew.-% Anatas und 20 bis 30 Gew.-% Rutil, vorzugsweise etwa 30 Gew.-% Rutil.

Der Katalysator weist vorzugsweise ein Porenvolumen von 0,1 bis 5 ml/g, besonders bevorzugt 0,2 bis 0,5 ml/g auf. Der mittlere Porendurchmesser beträgt vorzugsweise 0,005 bis 0,1 µm, besonders bevorzugt 0,01 bis 0,06 µm. Wird mit hochviskosen Produkten gearbeitet, sollte der mittlere Porendurchmesser groß gewählt werden. Die Schneidhärte ist vorzugsweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatoraktivität zu gewährleisten. Besonders bevorzugte Katalysatoren weisen folgende Eigenschaften auf: 100 % Anatas; 0,3 ml/g Porenvolumen; 0,02 µm mittlerer Porendurchmesser; 32 N Schneidhärte; 116 m²/g BET-Oberfläche oder 84 Gew.-% Anatas; 16 Gew.-% Rutil; 0,3 ml/g Porenvolumen; 0,03 µm mittlerer Porendurchmesser; 26 N Schneidhärte; 46 m²/g BET-Oberfläche. Die Katalysatoren können dabei aus handelsüblichen Pulvern, wie sie beispielsweise von Degussa, Finti oder Kemira angeboten werden, hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogenous catalysis", VCH Weinheim, 1997, Seiten 98ff beschrieben erfolgen.

Das erfindungsgemäße diskontinuierliche Verfahren wird vorzugsweise in einem geschlossenen Reaktionssystem in 3 oder 4 Stufen durchgeführt. Die einzelnen Reaktionsstufen werden nachfolgend detaillierter beschrieben.

Es kann mit konzentrierten Reaktionsmischungen mit einem Gewichtsverhältnis von Aminocapronitril zu Wasser von 1:1 bis 1:10 gearbeitet werden.

Erfindungsgemäß wird das in der ersten Stufe erhaltene Umsetzungsgemisch in Stufe 2 bei einer Temperatur von ungefähr 150 (200) bis ungefähr 400(350)°C, vorzugsweise einer Temperatur im Bereich von ungefähr 100 bis ungefähr 330(300)°C und insbesondere im Bereich von ungefähr 230 bis ungefähr 290(270)°C und einem Druck, der niedriger ist als der Druck in Stufe 1, weiter umgesetzt. Vorzugsweise ist der Druck in der zweiten Stufe mindestens ungefähr 0,5 x 10⁶ Pa niedriger als der Druck in Stufe 1, wobei im allgemeinen der Druck im Bereich von ungefähr 0,01 bis ungefähr 45 x 10⁶ Pa, vorzugsweise ungefähr 0,5 bis ungefähr 15 x 10⁶ Pa und insbesondere ungefähr 2 bis ungefähr 6 x 10⁶ Pa liegt (Werte in Klammern:mit Katalysator).

Dabei werden in Stufe 2 die Temperatur und der Druck so gewählt, daß eine erste Gasphase und eine erste flüssige oder erste feste Phase oder ein Gemisch aus erster flüssiger und erster fester Phase erhalten werden, und die erste Gasphase von der ersten flüssigen oder ersten festen Phase oder dem Gemisch aus erster flüssiger und erster fester Phase abgetrennt wird.

Die erste gasförmige Phase, die im wesentlichen aus Ammoniak und Wasserdampf besteht, entfernt man im allgemeinen kontinuierlich mit Hilfe einer Destillationsvorrichtung, wie einer Destillationskolonne. Die bei dieser Destillation gegebenenfalls mitabgeschiedenen organischen Bestandteile des Destillats, im überwiegendem Maße nicht umgesetztes Aminonitril, können in Stufe 1 und/oder Stufe 2 vollständig oder teilweise zurückgeführt werden.
Die Verweilzeit des Umsetzungsgemisch in Stufe 2 unterliegt keinerlei Beschränkungen, beträgt jedoch im allgemeinen ungefähr 10 Minuten bis ungefähr 5 Stunden, vorzugsweise ungefähr 30 Minuten bis ungefähr 3 Stunden.

Die Produktleitung zwischen der ersten und zweiten Stufe enthält gegebenenfalls Füllkörper, wie Raschig-Ringe oder Sulzer-Mischelemente, die eine kontrollierte Entspannung des Umsetzungsgemischs in die Gasphase ermöglichen.
In Stufe 3 wird die erste flüssige oder die erste feste Phase oder das Gemisch aus erster flüssiger und erster fester Phase mit einer gasförmigen oder flüssigen Phase, die Wasser enthält, vorzugsweise Wasser oder Wasserdampf versetzt. Die Menge an zugegebenem Wasser (als Flüssigkeit) liegt vorzugsweise im Bereich von ungefähr 50 bis ungefähr 1500 ml, weiter bevorzugt ungefähr 100 bis ungefähr 500 ml, jeweils bezogen auf 1 kg der ersten flüssigen oder ersten festen Phase oder des Gemischs aus erster flüssiger und erster fester Phase. Durch diesen Wasserzusatz werden in erster Linie die in der Stufe 2 verursachten Wasserverluste kompensiert und die Hydrolyse von Säureamidgruppen im Reaktionsgemisch gefördert. Daraus resultiert als weiterer Vorteil dieser Erfindung, daß das Gemisch der Ausgangsprodukte, wie es in Stufe 1 eingesetzt wird, lediglich mit einem kleinen Wasserüberschuß eingesetzt werden kann.

Vorzugsweise wird die Wasser enthaltende gasförmige oder flüssige Phase vor der Einleitung in Stufe 3 in einem Wärmetauscher vorgeheizt und anschließend mit der ersten flüssigen oder der ersten festen Phase oder dem Gemisch aus erster fester und erster flüssiger Phase vermischt. Dabei können gegebenenfalls Mischelemente im Reaktor eingesetzt werden, die die Durchmischung der Komponenten fördem.

Stufe 3 wird bei einer Temperatur von 150 bis 370°C, vorzugsweise 180 bis 300°C, besonders bevorzugt 220 bis 280°C und einem Druck von 0,1 bis 30 x 10⁶ Pa, vorzugsweise 1 bis 10 x 10⁶ Pa, besonders bevorzugt 2 bis 7 x 10⁶ Pa betrieben.

Dabei können Druck und Temperatur so aufeinander abgestimmt werden, daß das Reaktionsgemisch einphasig-flüsssig oder einphasig-fest vorliegt. In einer anderen Ausführungsform werden Druck und Temperatur so gewählt, daß eine flüssige oder eine feste Phase oder ein Gemisch aus fester und flüssiger Phase sowie eine gasförmige Phase erhalten werden. Bei dieser Ausführungsform entspricht die flüssige oder feste Phase oder das Gemisch aus flüssiger und fester Phase dem Produktgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch zweiphasig flüssig-gasförmig, fest-gasförmig oder flüssig/fest-gasförmig vorliegen.

Bei einer vorgewählten Temperatur kann der Druck so eingestellt werden, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die in dieser Stufe einsetzbaren Apparaturen/Reaktoren sind mit denen der Stufe 1, wie oben diskutiert, identisch.

Die Verweilzeit in der dritten Stufe unterliegt ebenfalls keinen Beschränkungen, aus wirtschaftlichen Gründen wählt man sie jedoch im allgemeinen im Bereich zwischen ungefähr 10 Minuten bis ungefähr 10 Stunden, vorzugsweise zwischen ungefähr 6 bis ungefähr 8 Stunden, besonders bevorzugt zwischen ungefähr 60 Minuten und 6 Stunden.

Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von ungefähr 200 bis ungefähr 350°C, vorzugsweise einer Temperatur von ungefähr 220 bis 300°C und insbesondere ungefähr 240 bis 270°C unterworfen. Stufe 4 wird bei einem Druck durchgeführt, der unterhalb des Drucks der Stufe 3 liegt, und vorzugsweise in einem Bereich von ungefähr 5 bis 1000 x 10³ Pa, weiter bevorzugt ungefähr 10 bis ungefähr 300 x 10³ Pa liegt. Im Rahmen dieser Stufe werden Temperatur und Druck so gewählt, daß eine zweite Gasphase und eine zweite flüssige oder feste Phase oder ein Gemisch aus zweiter flüssiger und zweiter fester Phase, die das Polyamid enthalten, erhalten werden.

Vorzugsweise wird die Nachkondensation gemäß Stufe 4 so durchgeführt, daß die relative Viskosität (gemessen bei einer Temperatur von 25°C und einer Konzentration von 1 g Polymer pro 100 ml in 96 Gew.-%iger Schwefelsäure) des Polyamids einen Wert im Bereich von ungefähr 1,6 bis ungefähr 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemischs in Stufe 4 richtet sich insbesondere nach der gewünschten relativen Viskosität, der Temperatur, dem Druck und der in Stufe 3 zugesetzten Wassermenge.

Wird die Stufe 3 einphasig betrieben, so können in der Produktleitung zwischen der Stufe 3 und der Stufe 4 ggf. Füllkörper, bestehend z.B. aus Raschig-Ringen oder Sulzer-Mischelementen, eingesetzt werden, welche eine kontrollierte Entspannung des Reaktionsgemischs in der Gasphase ermöglichen.

In einer weiteren Ausführungsform kann erfindungsgemäß auf Stufe 3 verzichtet werden und zur Herstellung des Polyamid können die Stufen (1), (2) und (4) ausgeführt werden.

### Vorzugsweise wird diese Variante wie folgt durchgeführt:

In Stufe 1 wird mindestens ein Aminoalkylnitril mit einem Überschuß an Wasser auf eine Temperatur im Bereich von ungefähr 220 bis ungefähr 270°C und einem Druck von ungefähr 4 bis 9 x 10⁶ Pa erhitzt, wobei man Druck und Temperatur so aufeinander abstimmt, daß das Reaktionsgemisch einphasig flüssig vorliegt, und wobei der Umsatz an Nitrilgruppen nicht kleiner als 95 mol-%, bezogen auf die Mol-Zahl an eingesetztem Aminoalkylnitril, beträgt, wobei ein Umsetzungsgemisch erhalten wird.

Das Umsetzungsgemisch wird in Stufe 2 wie vorstehend beschrieben oder bei einer Temperatur im Bereich von ungefähr 220 bis ungefähr 300°C und einem Druck im Bereich von ungefähr 1 bis ungefähr 7 x 10⁶ Pa behandelt, wobei der Druck in der zweiten Stufe mindestens 0,5 x 10⁶ Pa niedriger ist als in Stufe 1. Gleichzeitig wird die entstandene erste Gasphase von der ersten flüssigen Phase abgetrennt.

Die in Stufe 2 erhaltene erste flüssige Phase wird in Stufe 4 wie in Stufe 1 oder bei einer Temperatur im Bereich von ungefähr 220 bis 300°C und einem Druck im Bereich von ungefähr 10 bis ungefähr 300 x 10³ Pa behandelt, wobei die dabei enstehende zweite, Wasser und Ammoniak enthaltende Gasphase von der zweiten flüssigen Phase abgetrennt wird. Innerhalb dieser Stufe wird die relative Viskosität (gemessen wie oben definiert) des erhaltenen Polyamids auf einen gewünschten Wert im Bereich von ungefähr 1,6 bis ungefähr 3,5 durch Wahl der Temperatur und der Verweilzeit eingestellt.

Anschließend wird die so erhaltene zweite flüssige Phase nach üblichen Methoden ausgetragen und, falls dies erwünscht ist, aufgearbeitet.

Die oben beschriebenen Verfahren, d.h. die erfindungsgemäße Abfolge der Stufen (1) bis (3) oder (1), (2) und (4) oder (1) bis (4) wird bevorzugt diskontinuierlich, d.h. in einem Reaktor zeitlich nacheinander durchgeführt.

In einer weiteren bevorzugten Ausführungsform der vorliegenden Erfindung kann mindestens eine der in den jeweiligen Stufen erhaltenen Gasphasen in mindestens eine der vorhergehenden Stufen zurückgeführt werden.

Es ist weiterhin bevorzugt, daß in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

Ferner kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

### Als einsetzbare Substanzen sind zu nennen:

Trifunktionelle Amine oder Carbonsäuren als Verzweiger beziehungsweise Vernetzer. Beispiele geeigneter mindestens trifunktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ (I)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3',5'-Biphenyltetracarbonsäure-Phthalocyanin, Naphthalocyanin, 3,5,5',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäüre (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von orthosubstituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch in den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können, oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können die Diamine aromatisch-aliphatisch sein, beispielsweise kann n-Xylylendiamin verwendet werden. Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Die difunktionellen Grundbausteine (c) werden vorzugsweise in Mengen von 1 bis 55, besonders bevorzugt 1 bis 30, insbesondere 1 bis 15 µm/g Polyamid eingesetzt.

Erfindungsgemäß trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Methoden, wie sie z.B. in der DE-A 43 21 683 (S. 3, Z. 54 bis S. 4, Z.3) ausführlich beschrieben sind, aufarbeiten.

In einer bevorzugten Ausführungsform kann man den Gehalt an cyclischem Dimer im erfindungsgemäß erhaltenen Polyamid-6 weiter reduzieren, indem man das Polyamid zuerst mit einer wäßrigen Lösung von Caprolactam und anschließend mit Wasser extrahiert und/oder der Gasphasenextraktion (beispielsweise beschrieben in der EP-A-0 284 968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- bzw. Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Es können z.B. übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

### Als Kautschuke, die die Zähigkeit der Blends erhöhen, seien z.B. folgende genannt:

EP- bzw. EPDM-Kautschuke, die mit den obigen funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomere können in der Schmelze oder in Lösung, gegebenenfalls in Gegenwart eines Radikalstartes wie Cumolhydroperoxid auf das Polymere aufgepropft werden.

Die unter den Polymeren A beschriebenen Copolymere von α-Olefinen, darunter insbesondere die Ethylencopolymere können anstelle als Polymere A auch als Kautschuke eingesetzt und den erfindungsgemäßen Zusammensetzungen als solche beigemischt werden.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tert-Butyl(meth-)acrylat, Acrylsäure, Glycidyl(meth-)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der. Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen bis zu 40, vorzugsweise bis zu 15 Gew.-%, bezogen auf das Gesamtgewicht der Zusammensetzung.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfmdungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnaceoder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die Erfindung wird nachstehend anhand von Beispielen näher erläutert.

### Beispiele:

### Katalysatorherstellung

### Allgemeine Vorgehensweise

### Katalysator 1 Beta-Zeolith-Pulver

Als Katalysator wurde ein Beta-Zeolith von Uetikon (Zeokat-Beta) mit folgender Zusammensetzung eingesetzt: SiO₂=91%, Al₂O₃=7.8%, Na₂O=0.5%, K₂O =0.7%, BET-Oberfläche = 700 m²/g, Porengröße in Å = 7.6 x 6.7; 5.5 x 5.5, Teilchengröße 0.2-0.5 µm.

### Katalysator 2 Beta-Zeolith-Stränge

220 g β-Zeolith aus dem Beispiel 1 wurden mit 5 % Walocel® und 230 g Wasser 45 Minuten lang im Kneter verdichtet. Anschließend wurde die Masse mit 70 bar Preßdruck zu 2 mm Strängen verformt. Diese wurden bei 110°C getrocknet und bei 500°C 16 h lang calciniert.

195 g dieser Stränge wurden mit 3 Liter 20%iger NH₄Cl-Lösung bei 80°C 2 h lang ausgetauscht und anschließend mit 10 1 Wasser gewaschen. Anschließend wurde ein zweiter Austausch mit ebenfalls 3 1 20%iger NH₄Cl-Lösung bei 80°C / 2 h vorgenommen und das Produkt Cl-frei gewaschen. Nach dem Trocknen bei 110°C wurde 5 h lang bei 500°C calciniert.

### Katalysator 3 Schichtsilikat Typ K10®

K10® ist ein säurebehandelter Montmorillonit von Süd-Chemie. Er hat eine BET-Oberfläche von 180-220 m²/g und ein Ionenaustauschäquivalent von 40-50 mVal/100 g.

### Katalysatoren 4 und 5 TiO₂-Stränge aus 100% bzw. 84% Anatas

Die Herstellung folgt der Beschreibung in Ertl, Knözinger, Weitkamp: "Handbook of heterogenous catalysis", VCH Weinheim, 1997; Seite 98ff. Die in der vorstehenden Beschreibung als besonders bevorzugt beschriebenen TiO₂-Modifikationen wurden mit Wasser, Silica-Sol und Glycerin vermischt, extrudiert und bei 550°C calciniert.

### Katalysator 6 Titandioxid-Wolframoxid-Katalysator

Der verwendete Katalysator wurde durch inniges Vermischen des handelsüblichen Titandioxids VKR 611 (von Sachtleben) mit Wolframoxid und anschließende Verstrangung gemäß Beispiel 2 oder 4 erhalten.

Er besitzt folgende Spezifilation: 20 Gew.-% WO₃, 80 Gew.-% TiO₂; BET-Oberfläche = 73 m²/g, Gesamtacidität (pKₛ=6,8) = 0,56 mmol/g; Gesamtacidität (pKₛ= -3) = 0,035 mmol/g.

Die Reaktionsgemische aus ε-Aminocapronitril (ACN) und Wasser mit einem molaren Mischungsverhältnis zwischen 1:1 und 1:10 werden wahlweise mit oder ohne Säure nach vollständiger Durchmischung in einen 11-Autoklaven gegeben.

Wird Katalysatormaterial eingesetzt, so ist der Autoklav entweder ausschließlich mit einer Katalysatorgranulat-Schüttung oder mit einer Schüttung, bestehend aus Katalysatorgranulat und Raschig-Ring-Füllkörpern, ausgestattet. Verwendet werden strangförmige TiO₂-Katalysatoren mit einem Durchmesser von 0,5 bis 6 mm, einer Länge zwischen 1 und 10 mm und mit einer spezifischen Oberfläche von ca. 50 m²/g.

Der Autoklav wird verschlossen und mit Stickstoff durch mehrmalige Druckerhöhung mit anschließender Entspannung inertisiert.

Die Reinheit des eingesetzten Aminocapronitrils beträgt 99 %. Der Gewichtsanteil der Säuren ist bezogen auf die eingesetzte Aminocapronitril-Menge.

### Probenpräparation und Analytik:

Die sogenannte relative Viskosität (RV) als Maß für den Molekulargewichtsbau und Polymerisationsgrad wird in 96%iger Schwefelsäure als Lösungsmittel bei 25°C mittels Viskosimeter nach Ubbelohde bestimmt. Die Polyamidkonzentration beträgt 1 g/100 ml für extrahiertes Material und 1.1 g/100 ml für unextrahiertes Polymer. Unextrahierte Polymere werden vor der Analyse 20 Stunden im Vakuum getrocknet. Zur Extraktion wird das Granulat mit Wasser unter Rückfluß gerührt.

### Beispiele 1.1 - 1.8

Innerhalb von 75 Minuten wird ein Reaktionsgemisch (180 g) mit einem ACN:Wasser-Mischungsverhältnis ACN:H₂O=1:2 oder ACN:H₂O=1:4 im Reaktor auf eine Temperatur von 270°C geheizt, wobei der Druck durch die Regelung mit einem Entspannungsventil auf 18 bar gehalten wird. Das Katalysatorgranulat (400 g) bedeckt die Reaktionsmischung vollständig.
Nach einer Reaktionsdauer von 1 Stunde bei 18 bar wird der Autoklav innerhalb einer Stunde auf Umgebungsdruck (1 bar) entspannt und anschließend strangförmig entleert. Als Referenzversuch (Vergleichsbeispiele V 1.1 und V 1.6) wird das oben beschriebene Verfahren analog ohne Katalysator durchgeführt.

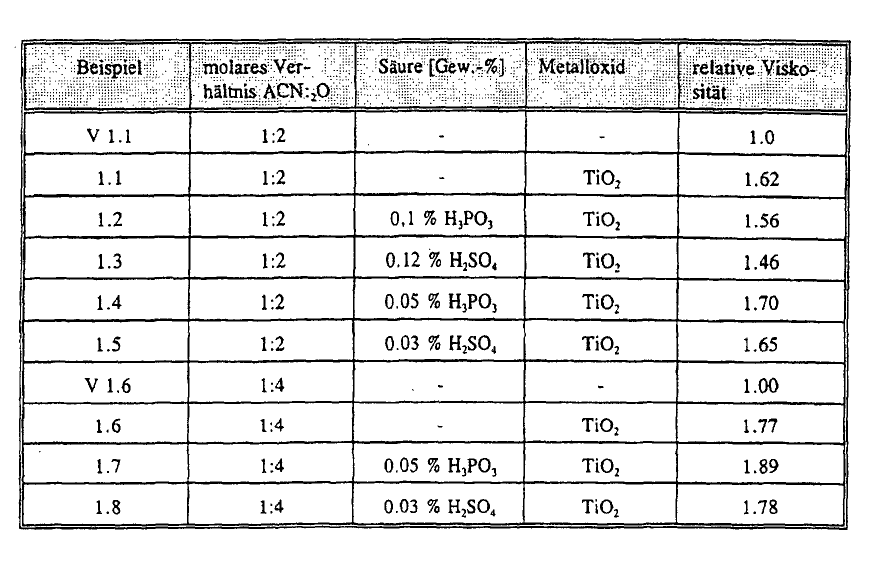

### Beispiel 2.1

Innerhalb von 75 Minuten wird ein Reaktionsgemisch (180 g) mit einem molaren Mischungsverhältnis ACN:H₂O =1:1 im Reaktor auf eine Temperatur von 270°C geheizt, wobei der Druck durch die Regelung mit einem Entspannungsventil auf 18 bar gehalten wird. Das Katalysatorgranulat (400 g) bedeckt die Reaktionsmischung vollständig. Nach einer Reaktionsdauer von 3 Stunden bei 18 bar wird der Autoklav innerhalb einer Stunde auf Umgebungsdruck (1 bar) entspannt, das Reaktionsgemisch 3 Stunden bei 270°C im Stickstoffstrom nachkondensiert und anschließend strangförmig in ein Wasserbad ausgefahren. Als Referenzversuch (Vergleichsbeispiel V 2.1) wird das oben beschriebene Verfahren analog ohne Katalysator durchgeführt.

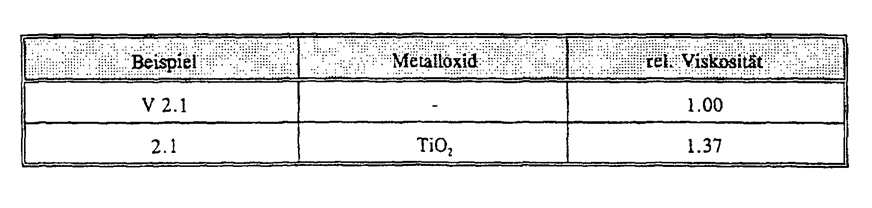

### Beispiele 3.1 - 3.2

Innerhalb von 75 Minuten wird ein Reaktionsgemisch (180 g) mit einem molaren Mischungsverhältnis ACN:H₂O= 1:2.5 im Reaktor auf eine Temperatur von 270°C geheizt, wobei der Druck durch die Regelung mit einem Entspannungsventil auf 18 bar gehalten wird. Das Katalysatorgranulat
(400 g) bedeckt die Reaktionsmischung vollständig. Nach einer Reaktionsdauer von 1 Stunde bei 18 bar wird der Autoklav innerhalb einer Stunde auf Umgebungsdruck (1 bar) entspannt, das Reaktionsgemisch 1 Stunde bei 270°C im Stickstoffstrom nachkondensiert und anschließend in ein Wasserbad ausgefahren. Als Referenzversuch (Vergleichsbeispiel V 3.1) wird das oben beschriebene Verfahren analog ohne Katalysator durchgeführt.

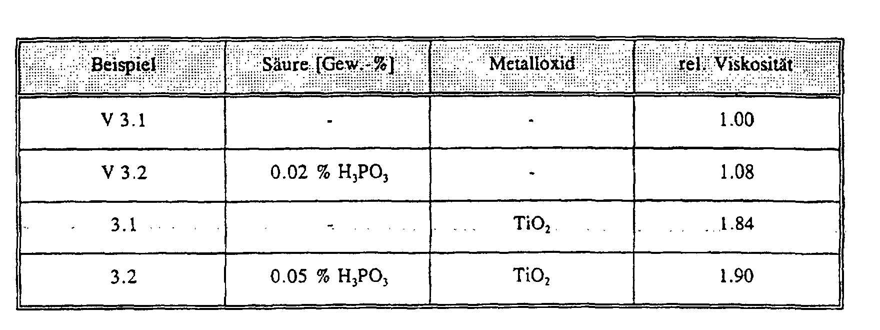

### Beispiel 4.1

Innerhalb von 75 Minuten wird ein Reaktionsgemisch (180 g) mit einem ACN:Wasser-Mischungsverhältnis ACN:H₂O=1:4 im Reaktor auf eine Temperatur von 270°C geheizt, wobei der Druck durch die Regelung mit einem Entspannungsventil auf 18 bar gehalten wird. Das Katalysatorgranulat (400 g) bedeckt die Reaktionsmischung vollständig. Nach einer Reaktionsdauer von 45 Minuten bei 18 bar wird der Autoklav innerhalb von 10 Minuten auf Umgebungsdruck (1 bar) entspannt und anschließend strangförmig entleert. Die relative Viskosität des Produktes wird als RV (Vorkondensat) bezeichnet. Das Produkt wird anschließend in einem weiteren Verfahrensschritt im Stickstoffstrom bei 160°C über einen Zeitraum von 48 Stunden getempert. Die Viskosität des getemperten Produktes wird als RV (Temper) bezeichnet.

### Beispiel 5.1

Innerhalb von 75 Minuten wird ein Reaktionsgemisch (180 g) mit einem ACN:Wasser-Mischungsverhältnis ACN:H₂O=1:4 im Reaktor auf eine Temperatur von 270°C geheizt, wobei der Druck durch die Regelung mit einem Entspannungsventil auf 18 bar gehalten wird. Das Katalysatorgranulat (400 g) bedeckt die Reaktionsmischung vollständig. Nach Erreichen der Endtemperatur von 270°C wird der Autoklav innerhalb von 10 Minuten auf Umgebungsdruck (1 bar) entspannt und anschließend strangförmig entleert. Die relative Viskosität des Produktes wird als RV (Vorkondensat) bezeichnet. Das erhaltene Produkt wird in einem weiteren Verfahrensschritt im Stickstoffstrom bei 160°C über eien Zeitraum von 48 Stunden getempert. Die Viskosität des getemperten Produktes wird als RV (Temper) bezeichnet.

### Beispiel 6.1

Der Autoklav enthält ein Schüttungsgemisch, bestehend aus 100 g Katalysator-Granulat und 340 g Raschig-Ringen (Durchmesser und Länge:6 mm). 250 g eines ACN:Wasser-Reaktionsgemisches mit dem molaren Mischungsverhältnis 1:4 werden innerhalb von 1 Stunde auf eine Temperatur von 270°C geheizt, wobei der Druck d urch die Regelung mit einem Entspannungsventil auf 18 bar gehalten wird. Nach Erreichen der Endtemperatur von 270°C wird der Autoklav innerhalb von 10 Minuten auf Umgebungsdruck (1 bar) entspannt und anschließend strangförmig entleert. Die relative Viskosität des Produktes wird als RV (Vorkondensat) bezeichnet. Das erhaltene Produkt wird anschließend mit Wasser (30 g Wasser auf 100 g Reaktionsprodukt) im Autoklaven ohne Katalysator erneut auf 260°C erhitzt und im Stickstoffstrom bei Umgebungsdruck über einen Zeitraum von 3 Stunden nachkondensiert. Die Viskosität des nachkondensierten Produktes wird als RV (Nachkondensat) bezeichnet.

Für die Vergleichsbeispiele (V 4.1, V 5.1 und V 6.1) werden die oben beschriebenen Verfahren 4.1, 5.1 und 6.1 ohne Katalysator durchgeführt. Da die Umsetzung des Reaktionsgemisches in Abwesenheit des Katalysators kein festes, granulierbares Produkt ergab, wurde von einer Nachkondensation beziehungsweise Temperung abgesehen.

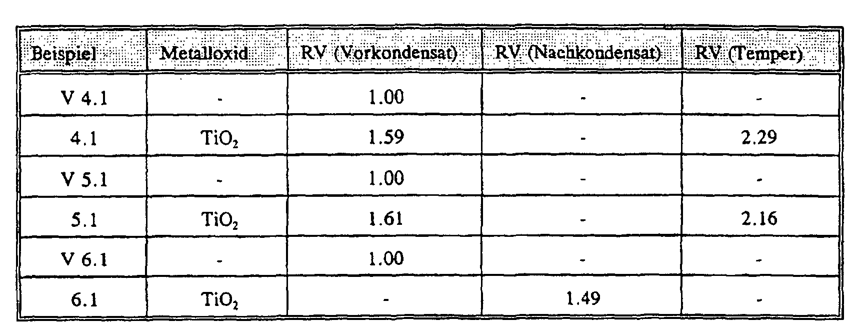

## Patentansprüche

1. Diskontinuierliches Verfahren zur Herstellung eines Polyamids durch Umsetzung eines mindestens ein Aminonitril und gegebenenfalls zur Polyamidherstellung einsetzbare Monomere enthaltenden Gemisches mit Wasser, das die folgenden Stufen umfaßt:
(1) Umsetzung des Gemisches mit Wasser bei einer Temperatur von 90 bis 400°C und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400°C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis 30 x 10⁶ Pa, wobei ein Produktgemisch erhalten wird,
wobei Stufe (1) in Gegenwart eines Brönsted-Säurekatalysators, ausgewählt aus einem Beta-Z eolith-, Schichtsilikat- oder einem Festbettkatalysator, der im wesentlichen aus TiO₂ mit 70 bis 100 Gew.-% Anatas und 0 bis 30 Gew.-% Rutil, in dem bis zu 40 Gew.-% des Titandioxids durch Wolframoxid ersetzt sein können, besteht, durchgeführt wird, und die Stufen (2) und (3) in Gegenwart dieses Katalysators durchgeführt werden können.

2. Diskontinuierliches Verfahren zur Herstellung eines Polyamids durch Umsetzung eines mindestens ein Aminonitril und gegebenenfalls zur Polyamidherstellung einsetzbare Monomere enthaltenden Gemisches mit Wasser, das die folgenden Stufen umfaßt:
(1) Umsetzung des Gemisches mit Wasser bei einer Temperatur von 90 bis 400°C und einem Druck von 0,1 bis 35 x 10⁶ Pa, wobei ein Umsetzungsgemisch erhalten wird,
(2) weitere Umsetzung des Umsetzungsgemischs bei einer Termperatur von 150 bis 400°C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis 30 x 10⁶ Pa, wobei ein Produktgemisch erhalten wird,
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden,
wobei Stufe (1) in Gegenwart eines Brönsted-Säurekatalysators, ausgewählt aus einem Beta-Zeolith-, Schichtsilikat- oder einem Festbettkatalysator, der im wesentlichen aus TiO₂ mit 70 bis 100 Gew.-% Anatas und 0 bis 30 Gew.-% Rutil, in dem bis zu 40 Gew.-% des Titandioxids durch Wolframoxid ersetzt sein können, besteht, durchgeführt wird, und die Stufen (2) und (3) in Gegenwart dieses Katalysators durchgeführt werden können.

3. Verfahren nach Anspruch 1 oder 2, wobei in Stufe 3 die gasförmige oder flüssige Phase, die Wasser enthält, in einer Menge von 50 bis 1500 ml Wasser pro 1 kg erste flüssige oder erste feste Phase oder Gemisch aus erster flüssiger und erster fester Phase zugesetzt wird.

4. Diskontinuierliches Verfahren zur Herstellung eines Polyamids durch Umsetzung eines mindestens ein Aminonitril und gegebenenfalls zur Polyamidherstellung einsetzbare Monomere enthaltenden Gemisches mit Wasser, das die folgenden Stufen umfaßt:
(1) Umsetzung des Gemisches mit Wasser bei einer Temperatur von 90 bis 400°C< und einem Druck von 0,1 bis 35 x 10⁶ Pa, wobei ein Umsetzungsgemisch erhalten wird,
(2) weitere Umsetzung des Umsetzungsgemischs bei einer Termperatur von 150 bis 400°C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden,
wobei Stufe (1) in Gegenwart eines Brönsted-Säurekatalysators, ausgewählt aus einem Beta-Zeolith-, Schichtsilikat- oder einem Festbettkatalysators, der im wesentlichen aus TiO₂ mit 70 bis 100 Gew.-% Anatas und 0 bis 30 Gew.-% Rutil, in dem bis zu 40 Gew.-% des Titandioxids durch Wolframoxid ersetzt sein können, besteht, durchgeführt wird und die Stufe (2) in Gegenwart dieses Katalysators durchgeführt werden kann.

5. Verfahren nach einem der Ansprüche 1 bis 4, wobei in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

6. Verfahren nach einem der Ansprüche 1 bis 5, wobei in Stufe 3 die gasförmige oder flüssige Phase, die Wasser enthält, in einer Menge von 50 bis 1500 ml Wasser pro 1 kg erste flüssige oder erste feste Phase oder Gemisch aus erster flüssiger und erster fester Phase zugesetzt wird.

7. Verfahren nach einem der Ansprüche 1 bis 6, wobei der Katalysator nach der Stufe (2) aus dem Reaktionsgemisch abgetrennt wird.

8. Verfahren nach einem der Ansprüche 1 bis 7, wobei mindestens eine der in den jeweiligen Stufen erhaltenen Gasphasen in mindestens eine der vorhergehenden Stufen zurückgeführt wird.

9. Verfahren nach einem der Ansprüche 1 bis 8, wobei als Aminonitril ein ω-Aminoalkylnitril mit einem Alkylenrest (-CH₂-) von 4 bis 12 C-Atomen oder ein Aminoalkylarylnitril mit 8 bis 13 C-Atomen umgesetzt wird.

10. Verfahren nach einem der Ansprüche 1 bis 9, wobei folgendes Gemisch eingesetzt wird:
von 50 bis 99,99 Gew.-% 6-Aminocapronitril,
von 0,01 bis 50 Gew.-% mindestens einer Dicarbonsäure, ausgewählt aus der Gruppe bestehend aus aliphatischen C₄-C₁₀-α,ω-Dicarbonsäuren, aromatischen C₈-C₁₂-Dicarbonsäuren und C₅-C₈-Cycloalkandicarbonsäuren,
von 0 bis 50 Gew.-% eines α,ω-Diamins mit 4 - 10 Kohlenstoffatomen,
von 0 bis 50 Gew.-% eines α,ω-C₂-C₁₂-Dinitrils sowie
von 0 bis 50 Gew.-% einer α,ω-C₅-C₁₂-Aminosäure oder des entsprechenden Lactams,
von 0 bis 10 Gew.-% mindestens einer anorganischen Säure oder deren Salz,
wobei die Summe der einzelnen Gew.-%-Angaben 100 % beträgt.

11. Verfahren nach einem der Ansprüche 1 bis 10, wobei nach den Stufen (1) bis (3) beziehungsweise (4) eine Kettenverlängerung oder eine Kettenverzweigung oder eine Kombination aus beiden durchgeführt wird.

## Claims

1. A batch process for producing a polyamide by reaction of a mixture comprising at least one aminonitrile, and optionally monomers useful for polyamide production, with water, which comprises the following steps:
(1) reacting the mixture with water at a temperature from 90 to 400°C and a pressure from 0.1 to 35 × 10⁶ Pa to obtain a reaction mixture,
(2) further reacting the reaction mixture at a temperature from 150 to 400°C and a pressure which is lower than the pressure in step 1, the temperature and pressure being selected so as to obtain a first gas phase and a first liquid or a first solid phase or a mixture of first solid and first liquid phase, and the first gas phase is separated from the first liquid or the first solid phase or from the mixture of first liquid and first solid phase, and
(3) admixing the first liquid or the first solid phase or the mixture of first liquid and first solid phase with a gaseous or liquid phase comprising water at a temperature from 150 to 370°C and a pressure from 0.1 to 30 × 10⁶ Pa to obtain a product mixture,
wherein step (1) is carried out in the presence of a Brönsted acid catalyst selected from a beta-zeolite catalyst, a sheet-silicate catalyst or a fixed bed catalyst consisting essentially of TiO₂ comprising from 70 to 100% by weight of anatase and from 0 to 30% by weight of rutile and in which up to 40% by weight of the titanium dioxide may be replaced by tungsten oxide, and steps (2) and (3) may be carried out in the presence of this catalyst.

2. A batch process for producing a polyamide by reaction of a mixture comprising at least one aminonitrile, and optionally monomers useful for polyamide production, with water, which comprises the following steps:
(1) reacting the mixture with water at a temperature from 90 to 400°C and a pressure from 0.1 to 35 × 10⁶ Pa to obtain a reaction mixture,
(2) further reacting the reaction mixture at a temperature from 150 to 400°C and a pressure which is lower than the pressure in step 1, the temperature and pressure being selected so as to obtain a first gas phase and a first liquid or a first solid phase or a mixture of first solid and first liquid phase, and the first gas phase is separated from the first liquid or the first solid phase or from the mixture of first liquid and first solid phase, and
(3) admixing the first liquid or the first solid phase or the mixture of first liquid and first solid phase with a gaseous or liquid phase comprising water at a temperature from 150 to 370°C and a pressure from 0.1 to 30 × 10⁶ Pa to obtain a product mixture,
(4) postcondensing the product mixture at a temperature from 200 to 350°C and a pressure which is lower than the pressure of step 3, the temperature and pressure being selected so as to obtain a second, water- and ammonia-comprising gas phase and a second liquid or second solid phase or a mixture of second liquid and second solid phase, which each comprise the polyamide,
wherein step (1) is carried out in the presence of a Brönsted acid catalyst selected from a beta-zeolite catalyst, a sheet-silicate catalyst or a fixed bed catalyst consisting essentially of TiO₂ comprising from 70 to 100% by weight of anatase and from 0 to 30% by weight of rutile and in which up to 40% by weight of the titanium dioxide may be replaced by tungsten oxide, and steps (2) and (3) may be carried out in the presence of this catalyst.

3. A process as claimed in claim 1 or 2, wherein, in step 3, the gaseous or liquid phase comprising water is added in an amount from 50 to 1500 ml of water per 1 kg of first liquid or first solid phase or mixture of first liquid and first solid phase.

4. A batch process for producing a polyamide by reaction of a mixture comprising at least one aminonitrile, and optionally monomers useful for polyamide production, with water, which comprises the following steps:
(1) reacting the mixture with water at a temperature from 90 to 400°C< and a pressure from 0.1 to 35 × 10⁶ Pa to obtain a reaction mixture,
(2) further reacting the reaction mixture at a temperature from 150 to 400°C and a pressure which is lower than the pressure in step 1, the temperature and pressure being selected so as to obtain a first gas phase and a first liquid or a first solid phase or a mixture of first solid and first liquid phase, and the first gas phase is separated from the first liquid or the first solid phase or from the mixture of first liquid and first solid phase, and
(4) postcondensing the first liquid or the first solid phase or the mixture of first liquid and first solid phase at a temperature from 200 to 350°C and a pressure which is lower than the pressure of step 3, the temperature and pressure being selected so as to obtain a second, water- and ammonia-comprising gas phase and a second liquid or second solid phase or a mixture of second liquid and second solid phase, which each comprise the polyamide,
wherein step (1) is carried out in the presence of a Brönsted acid catalyst selected from a beta-zeolite catalyst, a sheet-silicate catalyst or a fixed bed catalyst consisting essentially of TiO₂ comprising from 70 to 100% by weight of anatase and from 0 to 30% by weight of rutile and in which up to 40% by weight of the titanium dioxide may be replaced by tungsten oxide, and step (2) may be carried out in the presence of this catalyst.

5. A process as claimed in any of claims 1 to 4, wherein the temperature and pressure in step 1 or in step 3 or in both step 1 and step 3 are selected so as to obtain a liquid or a solid phase or a mixture of liquid and solid phase and a gaseous phase, and the gaseous phase is separated off.

6. A process as claimed in any of claims 1 to 5, wherein in step 3, the gaseous or liquid phase comprising water is added in an amount from 50 to 1500 ml of water per 1 kg of first liquid or first solid phase or mixture of first liquid and first solid phase.

7. A process as claimed in any of claims 1 to 6, wherein the catalyst is removed from the synthesis mixture after step 2.

8. A process as claimed in any of claims 1 to 7, wherein at least one of the gas phases obtained in the respective steps is recycled into at least one of the preceding steps.

9. A process as claimed in any of claims 1 to 8, wherein the aminonitrile used is an ω-aminoalkyl nitrile having an alkylene moiety (-CH₂-) of from 4 to 12 carbon atoms or an aminoalkylaryl nitrile having from 8 to 13 carbon atoms.

10. A process as claimed in any of claims 1 to 9, wherein the following mixture is used:
from 50 to 99.99% by weight of 6-aminocapronitrile,
from 0.01 to 50% by weight of at least one dicarboxylic acid selected from the group consisting of aliphatic C₄-C₁₀-α,ω-dicarboxylic acids, aromatic C₈-C₁₂-dicarboxylic acids and C₅-C₈-cycloalkanedicarboxylic acids,
from 0 to 50% by weight of an α,ω-diamine having 4-10 carbon atoms,
from 0 to 50% by weight of an α,ω-C₂-C₁₂-dinitrile, and
from 0 to 50% by weight of an α,ω-C₅-C₁₂-amino acid or of the corresponding lactam,
from 0 to 10% by weight of at least one inorganic acid or salt thereof,
the individual weight percentages adding up to 100%.

11. A process as claimed in any of claims 1 to 10, wherein a chain lengthening or a chain branching or a combination thereof is carried out following steps (1) to (3) or (4).

## Revendications

1. Procédé discontinu de préparation d'un polyamide par réaction d'un mélange contenant au moins un aminonitrile et éventuellement des monomères convenant à la préparation de polyamide et d'eau, comportant les étapes suivantes:
(1) Réaction du mélange avec de l'eau à une température de 90 à 400°C et une pression de 0,1 à 35 x 10⁶ Pa, avec obtention d'un mélange réactionnel,
(2) Réaction subséquente du mélange réactionnel, à une température de 150 à 400°C et une pression inférieure à la pression de l'étape 1, où la température et la pression sont choisies de manière à obtenir une première phase gazeuse et une première phase liquide ou une première phase solide, ou un mélange de première phase solide et de première phase liquide, et où la première phase gazeuse est séparée de la première phase liquide et de la première phase solide ou du mélange de première phase solide et de première phase liquide, et
(3) Mélange de la première phase liquide ou de la première phase solide, ou du mélange de première phase solide et de première phase liquide, à une phase gazeuse ou liquide contenant de l'eau, à une température de 150 à 370°C et une pression de 0,1 à 30 x 10⁶ Pa, avec obtention d'un mélange de produits,
l'étape (1) étant entreprise en présence d'un catalyseur acide de Brönsted, choisi parmi des catalyseurs de β-zéolithe, de silicate stratifié ou à lit fixe, consistant essentiellement en TiO₂ avec 70 à 100% en poids d'anatase et 0 à 30% de rutile, dans lequel jusqu'à 40% en poids du dioxyde de titane peuvent être remplacés par de l'oxyde de tungstène, et les étapes (2) et (3) pouvant être entreprises en présence de ce catalyseur.

2. Procédé discontinu de préparation d'un polyamide par réaction d'un mélange contenant au moins un aminonitrile et éventuellement des monomères convenant à la préparation de polyamide avec de l'eau, comportant les étapes suivantes:
(1) Réaction du mélange avec de l'eau à une température de 90 à 400°C et une pression de 0,1 à 35 x 10⁶ Pa, avec obtention d'un mélange réactionnel,
(2) Réaction subséquente du mélange réactionnel, à une température de 150 à 400°C et une pression inférieure à la pression de l'étape 1, où la température et la pression sont choisies de manière à obtenir une première phase gazeuse et une première phase liquide ou une première phase solide, ou un mélange de première phase solide et de première phase liquide, et où la première phase gazeuse est séparée de la première phase liquide et de la première phase solide ou du mélange de première phase solide et de première phase liquide, et
(3) Mélange de la première phase liquide ou de la première phase solide, ou du mélange de première phase solide et de première phase liquide, à une phase gazeuse ou liquide contenant de l'eau, à une température de 150 à 370°C et une pression de 0,1 à 30 x 10⁶ Pa, avec obtention d'un mélange de produits,
(4) Post-condensation du mélange de produits à une température de 200 à 350°C et une pression inférieure à la pression de l'étape 3, où la pression et la température sont choisies de manière à obtenir une deuxième phase gazeuse contenant de l'eau et de l'ammoniac et une deuxième phase liquide ou une deuxième phase solide, ou un mélangé de deuxième phase liquide et de deuxième phase solide, contenant à chaque fois du polyamide,
l'étape (1) étant entreprise en présence d'un catalyseur acide de Brönsted, choisi parmi des catalyseurs de β-zéolithe, de silicate stratifié ou à lit fixe, consistant essentiellement en TiO₂ avec 70 à 100% en poids d'anatase et 0 à 30% de rutile, dans lequel jusqu'à 40% en poids du dioxyde de titane peuvent être remplacés par de l'oxyde de tungstène, et les étapes (2) et (3) pouvant être entreprises en présence de ce catalyseur.

3. Procédé selon la revendication 1 ou 2, où dans l'étape 3, la phase gazeuse ou liquide, contenant de l'eau, est ajoutée en quantité de 50 à 1500 ml d'eau par 1 kg de première phase liquide ou de première phase solide ou de mélange de première phase liquide et de première phase solide.

4. Procédé discontinu de préparation d'un polyamide par réaction d'un mélange contenant au moins un aminonitrile et éventuellement de monomères convenant à la préparation de polyamide et d'eau, comportant les étapes suivantes:
(1) Réaction du mélange avec de l'eau à une température de 90 à 400°C< et une pression de 0,1 à 35 x 10⁶ Pa, avec obtention d'un mélange réactionnel,
(2) Réaction subséquente du mélange réactionnel, à une température de 150 à 400°C et une pression inférieure à la pression de l'étape 1, où la température et la pression sont choisies de manière à obtenir une première phase gazeuse et une première phase liquide ou une première phase solide, ou un mélange de première phase solide et de première phase liquide, et où la première phase gazeuse est séparée de la première phase liquide et de la première phase solide ou du mélange de première phase solide et de première phase liquide, et
(4) Post-condensation de la première phase liquide ou de la première phase solide, ou du mélange de première phase liquide et première phase solide, à une température de 200 à 350°C et une pression inférieure à la pression de l'étape 3, la température et la pression étant choisies de manière que l'on obtienne une deuxième phase gazeuse contenant de l'eau et de l'ammoniac et une deuxième phase liquide ou une deuxième phase solide ou un mélange de deuxième phase liquide et de deuxième phase solide, contenant à chaque fois du polyamide,
l'étape (1) étant entreprise en présence d'un catalyseur acide de Brönsted, choisi parmi des catalyseurs de β-zéolithe, de silicate stratifié ou à lit fixe, consistant essentiellement en TiO₂ avec 70 à 100% en poids d'anatase et 0 à 30% de rutile, dans lequel jusqu'à 40% en poids du dioxyde de titane peuvent être remplacés par de l'oxyde de tungstène, et l'étape (2) pouvant être entreprise en présence de ce catalyseur.

5. Procédé selon l'une des revendications 1 à 4, où dans l'étape 1 ou l'étape 3, ou bien dans l'étape 1 et dans l'étape 3, la température et la pression sont choisies de manière que l'on obtienne une phase liquide ou une phase solide, ou un mélange de phase liquide et de phase solide, et une phase gazeuse, et où l'on sépare la phase gazeuse.

6. Procédé selon l'une des revendications 1 à 5, où dans l'étape 3, la phase gazeuse ou liquide, contenant de l'eau, est ajoutée en quantité de 50 à 1500 ml d'eau par 1 kg de première phase liquide ou de première phase solide, ou de mélange de première phase liquide et de première phase solide.

7. Procédé selon l'une des revendications 1 à 6, où le catalyseur est séparé du mélange réactionnel après l'étape (2).

8. Procédé selon l'une des revendications 1 à 7, où au moins l'une des phases gazeuses obtenues dans les étapes respectives est recyclée dans au moins une des étapes précédentes.

9. Procédé selon l'une des revendications 1 à 8, où l'on fait réagir, comme aminonitrile, un ω-aminoalkylnitrile avec un radical alkyle (-CH₂-) comportant de 4 à 12 atomes de carbone ou un aminoalkyarylnitrile comportant de 8 à 13 atomes de carbone.

10. Procédé selon l'une des revendications 1 à 9, où l'on met en oeuvre le mélange suivant:
de 50 à 99,99% en poids de 6-aminocapronitrile,
de 0,01 à 50% en poids d'au moins un acide dicarboxylique, choisi dans le groupe formé par des acides α,ω-dicarboxyliques aliphatiques en C₄ à C₁₀, des acides dicarboxyliques aromatiques en C₈ à C₁₂ et des acides cycloalcane-dicarboxyliques en C₅ à C₈,
de 0 à 50% en poids d'une α,ω-diamine comportant de 4 à 10 atomes de carbone,
de 0 à 50% en poids d'un α,ω-dinitrile en C₅ à C₁₂, ainsi que
de 0 à 50% en poids d'un α,ω-aminoacide en C₅ à C₁₂ ou du lactame correspondant,
de 0 à 10% en poids d'au moins un acide inorganique ou de ses sels,
la somme des pourcentages en poids totalisant 100%.

11. Procédé selon l'une des revendications 1 à 10, où après les étapes (1) à (3) et/ou (4), on opère un allongement de chaîne ou une ramification de chaîne, ou une combinaison des deux.
